# EUROPÄISCHE PATENTSCHRIFT

(11) **EP 3 364 057 B1**
(45) Veröffentlichungstag und Bekanntmachung des Hinweises auf die Patenterteilung: **14.10.2020**
(21) Anmeldenummer: 18156839.5
(22) Anmeldetag: 15.02.2018
(51) Int. Cl.: F16B 43/00, F16B 5/06, F16B 25/00, F16B 43/02

(54) **VORRICHTUNG ZUR BEFESTIGUNG VON PLATTENFÖRMIGEN ELEMENTEN AN DARUNTER ANGEORDNETEN, FLÄCHIGEN TRAGELEMENTEN**
DEVICE FOR FASTENING PLATE-SHAPED ELEMENTS TO FLAT SUPPORT ELEMENTS ARRANGED UNDERNEATH
DISPOSITIF DE FIXATION D'ÉLÉMENTS EN FORME DE PLAQUE SUR DES ÉLÉMENTS DE SUPPORT PLATS DISPOSÉS AU-DESSOUS DES DITS ÉLÉMENTS EN FORME DE PLAQUE

(30) Priorität: 16.02.2017 DE 202017100840 U
(43) Veröffentlichungstag der Anmeldung: 22.08.2018
(73) Patentinhaber: Hoffmeier Industrieanlagen GmbH + Co. KG, 59071 Hamm (DE)
(72) Erfinder: SCHMITT, Jörg, 59594 Soest (DE)
(74) Vertreter: Meinke, Jochen

(56) Entgegenhaltungen:
- WO-A1-2017/014988
- DE-U1-202012 104 226
- US-A- 4 157 725

## Beschreibung

Die Erfindung betrifft eine Vorrichtung zur Befestigung von plattenförmigen Elementen an darunter angeordneten, flächigen Tragelementen mit den Merkmalen des Oberbegriffs des Patentanspruchs 1.

Im Stahlbau werden häufig in Abstand voneinander angeordnete Tragelemente, z.B. in Form von T- oder Doppel-T-Profilen zur Bildung eines begehbaren Zwischenbodens od. dgl. mit plattenförmigen Elementen in Form von Riffelblechen oder Tränenblechen überdeckt, wobei die plattenförmigen Elemente randseitig jeweils auf einem Profilträger aufliegen und an diesem befestigt werden müssen.

Die Verbindung solcher Tränen- oder Riffelbleche mit Trägerflanschen ist in der Praxis nur mit aufwendigen Vormontagen bzw. unter erschwerten Montagebedingungen möglich. In Betracht kommt eine Verbindung durch eine Schweißnaht oder auch eine Verbindung durch die Einbringung von selbstschneidenden oder selbstfurchenden Schrauben sowie die Verwendung sogenannter Bodenklemmen.

Bei der Verbindung mit einer Schweißnaht wird die Korrosionsschutzbeschichtung des jeweiligen Trägers bzw. Tränen- oder Riffelbleches beschädigt. Zudem ist die Verbindungsmethode sehr arbeitsintensiv. Ferner ist es praktisch nicht möglich, die Verbindung wieder zu lösen.

Bei der Verbindung mit selbstfurchenden Schrauben weist das Tränen- bzw. Riffelblech im Anlieferungszustand Schraublöcher mit Senkung auf. Durch diese Löcher bohrt man auf der Baustelle ein Loch in den darunter liegenden Trägerflansch. In dieses Loch wird dann eine selbstfurchende oder selbstschneidende Schraube mit Senkkopf eingeschraubt.

Alternativ ist es auch bekannt, Befestigungsvorrichtungen zu verwenden, die neben einer Klemmschraube eine Klemmscheibe oder eine Klemmmutter aufweisen. Unterhalb der Flansche der Träger befinden sich dann die der Neigung der Flanschflächen entsprechenden Klemmscheiben sowie die Klemmmuttern. Die Klemmschrauben werden auf der Baustelle von oben durch Bohrungen im plattenförmigen Element und dem Trägerflansch hindurchgesteckt. Die Klemmscheiben werden von unten beigelegt und die Klemmmuttern von unten auf das Gewinde der Klemmschraube aufgeschraubt und fest angezogen.

Aufgrund der Höhe der Träger und des Maßes der baulichen Abstände der Träger untereinander sind für solche Montagen jedoch Untergerüste notwendig, wodurch der Aufwand entsprechend hoch ist. Außerdem sind jeweils wenigstens zwei Bedienungspersonen erforderlich: Eine auf dem plattenenförmigen Element stehend und eine unterhalb auf dem Untergerüst.

Zur Vermeidung dieser Nachteile ist aus DE 18 24 846 U eine Befestigungsvorrichtung bekannt geworden, welche eine Klemmschraube und ein Klemmelement aufweist, das mit einem Innengewinde ausgerüstet ist. Ferner ist ein Verdrehschutz vorgesehen. Bei dieser Vorrichtung ist es nicht erforderlich, an der Baustelle die Trägerflansche zu durchbohren, stattdessen werden die plattenförmigen Elemente vor der Montage bereits mit den Befestigungsvorrichtungen ausgerüstet, d.h. in jeder Bohrung der plattenförmigen Elemente sind die Befestigungsvorrichtungen vormontiert. Die so ausgerüsteten plattenförmigen Elemente werden auf der Baustelle auf den jeweiligen Stahlbauträger aufgelegt. Durch anziehendes Drehen des Kopfes der Klemmschraube von oben mittels Werkzeug hebt sich das Klemmelement mit Muttergewinde von unten bis zu Anlage und Pressung an die Flanschfläche des Trägers an, so dass die Montage allein von oben durchgeführt werden kann.

Diese Lösung hat sich in der Praxis jedoch nicht durchgesetzt, vermutlich deshalb, weil sie der vorgeschilderten Vormontage bedarf, d.h. sämtliche plattenförmigen Elemente bereits vor der eigentlichen Montage mit den Befestigungsvorrichtungen ausgerüstet sein müssen.

Aus WO 2017/014988 A1 ist eine Vorrichtung mit den Merkmalen des Oberbegriffs des Patentanspruchs 1 bekannt. Diese Vorrichtung weist eine selbstfurchende Schraube und eine federnd ausgebildete Unterlegscheibe auf, die innenseitig zwei Arten von krallenartigen Vorsprüngen zur Anlage am Schraubenschaft bzw. zur Anlage am Bohrungsrand aufweist. Der Schraubenkopf liegt auf dem umlaufenden Randbereich der Unterlegscheibe auf. Eine solche Vorrichtung ist zur Befestigung von Tränen- oder Riffelblechen nicht geeignet.

DE202012104226U zeigt eine weitere Vorrichtung des Standes der Technik.

Aufgabe der Erfindung ist es, eine Befestigungsvorrichtung so weiterzuentwickeln, dass eine Vormontage nicht notwendig ist, sondern dass die Vorrichtung mit möglichst geringem Montageaufwand erst auf der Baustelle montiert werden kann, wobei eine stabile Befestigung gewährleistet sein soll.

Diese Aufgabe wird bei einer Vorrichtung gemäß dem Anspruch 1 gelöst.

Durch diese Gestaltung ist eine Vormontage nicht erforderlich, vielmehr müssen nur die plattenförmigen Elemente und die Tragelemente werkseitig mit zur Aufnahme der tellerförmigen Befestigungselemente bzw. zum Einschrauben der Befestigungsschrauben ausreichend groß dimensionierten Bohrungen bzw. Öffnungen versehen sein. Auf der Baustelle selbst wird dann in die jeweilige Bohrung im plattenförmigen Element ein tellerförmiges Befestigungselement so eingesetzt, dass es mit seinem umlaufenden Randbereich umfänglich auf dem Bohrungsrand aufliegt. Anschließend wird eine selbstfurchende Schraube durch die zentrale Durchtrittsöffnung des tellerförmigen Befestigungselementes hindurch in die zugeordnete Bohrung im darunter angeordneten flächigen Tragelement, z.B. ein T- oder Doppel-T-Profil, eingeschraubt. Dadurch ist eine äußerst schnelle Montage nur von oben durch eine Bedienungsperson möglich. Durch das tellerförmige Element wird eine stabile Verbindung zwischen dem plattenförmigen Element und dem darunter befindlichen Tragelement sichergestellt. Auch etwaige Höhenunterschiede und Toleranzen lassen sich durch das tellerförmige Element ausgleichen, weil die Bohrungen im plattenförmigen Element groß dimensioniert werden können.

Besonders bevorzugt ist vorgesehen, dass der innerhalb der Bohrung im plattenförmigen Element befindliche Bereich des tellerförmigen Befestigungselementes so dimensioniert ist, dass seine Unterkante oberhalb der Unterkante des plattenförmigen Elementes angeordnet ist. Dies bietet den Vorteil, dass ein tellerförmiges Element gleicher Bauart für unterschiedlich dicke plattenförmige Element verwendet werden kann.

Bevorzugt weist das tellerförmige Befestigungselement an der Unterseite des umlaufenden Randbereiches vorstehende Auflagenasen auf. Dadurch ist gewährleistet, dass das tellerförmige Befestigungselement eben auf dem plattenförmigen Element, insbesondere Tränen- oder Riffelblech, aufliegt, in die die Auflagenasen zwischen die Vorsprünge eingreifen.

In weiterer bevorzugter Ausgestaltung ist vorgesehen, dass der umfängliche Randbereich des tellerförmigen Befestigungselementes zum Außenrand hin nach unten geneigt ausgebildet ist. Durch diese Gestaltung wird zuverlässig vermieden, dass die jeweilige Vorrichtung eine Stolperfalle darstellt, wenn jemand nach der Montage der Vorrichtung auf dem von den plattenförmigen Elementen gebildeten Bodenbelag geht oder läuft.

Das plattenförmige Element kann auf einfache Weise als Blechstanzteil ausgebildet sein.

Alternativ kann auch vorgesehen sein, dass das tellerförmige Befestigungselement als Drehteil ausgebildet ist.

Die Erfindung ist nachstehend anhand der Zeichnungen beispielhaft näher erläutert. Diese zeigt in
- Fig. 1: eine Draufsicht auf ein tellerförmiges Element der Vorrichtung nach einer ersten Ausgestaltung,
- Fig. 2: einen Schnitt durch die Vorrichtung nach Fig. 1,
- Fig. 3: ein vergrößertes Detail III in Fig. 2,
- Fig. 4: eine Draufsicht auf ein tellerförmiges Befestigungselement der Vorrichtung in einer zweiten Ausgestaltung,
- Fig. 5: einen Schnitt durch das tellerförmige Element nach Fig. 4,
- Fig. 6: eine Draufsicht auf zwei jeweils im Eckbereich eines Tränenbleches montierte Vorrichtungen,
- Fig. 7: einen Schnitt durch Fig. 6 mit unter den Tränenblechen angeordneten Fugen-Unterlegblech als flächiges Tragelement,
- Fig. 8: eine Draufsicht auf zwei jeweils in einem Eckbereich eines Tränenbleches angeordnete Vorrichtungen,
- Fig. 9: einen Schnitt durch Fig. 8 mit einem üblichen T-Profilträger als Tragelement,
- Fig. 10: eine Draufsicht auf zwei jeweils an einem Tränenblech montierte Vorrichtungen und in
- Fig. 11: einen Schnitt durch Fig. 10 mit einem schmalen T-Profilträger als Tragelement.

Eine erfindungsgemäße Vorrichtung zur Befestigung von plattenförmigen Elementen, nämlich vorzugsweise von Tränenblechen 1, weist im Wesentlichen zwei Teile auf, nämlich ein tellerförmiges Befestigungselement 2 und eine selbstfurchende Befestigungsschraube 3. Das tellerförmige Befestigungselement 2 ist so dimensioniert, dass es in eine Bohrung 4 im Tränenblech 1 derart einsetzbar ist, dass es mit seinem umfänglichen Randbereich 5 umlaufend auf dem Bohrungsrand 6 der Bohrung 4 des Tränenbleches 1 aufliegt. Dabei ist das tellerförmige Befestigungselement 2 bevorzugt so dimensioniert, dass seine Unterkante 7 in montierter Lage oberhalb der Unterkante 8 des Tränenbleches 1 angeordnet ist. Das tellerförmige Befestigungselement 2 weist eine zentrale Durchtrittsöffnung 9 zum Durchtritt der Befestigungsschraube 3 auf.

Damit das tellerförmige Befestigungselement 2 mit seinem umlaufenden Randbereich 5 eben auf der Oberfläche des Tränenbleches 1 aufliegt, ist bevorzugt vorgesehen, dass das tellerförmige Befestigungselement 2 an der Unterseite des umlaufenden Randbereiches 5 vorstehende Auflagenasen 10 aufweist. Durch entsprechende Ausrichtung des tellerförmigen Befestigungselementes 2 auf dem jeweiligen Tränenblech 1 ist gewährleistet, dass die Auflagenasen 10 so auf der Oberseite des Tränenbleches 1 aufliegen, dass die Auflagenasen 10 in die Vertiefungen des Tränenbleches 1 eingreifen.

Der umfängliche Randbereich 5 des tellerförmigen Befestigungselementes 2 ist bevorzugt zum Außenrand hin nach unten geneigt ausgebildet, so dass der Außenrand 11 an der Oberfläche des Tränenbleches 1 anliegt und das tellerförmige Befestigungselement 2 keine Stolperkante bildet.

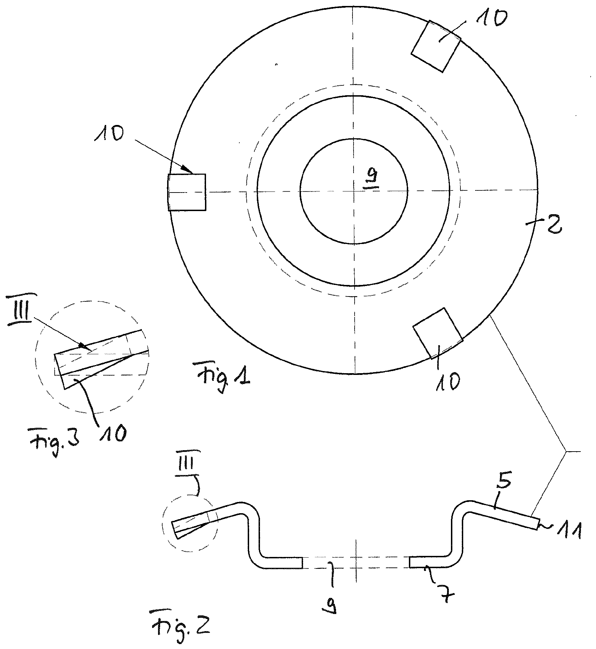

Das in den Fig. 1 bis 3 sowie 6 bis 11 dargestellte tellerförmige Befestigungselement 2 der Vorrichtung ist bevorzugt als Blechstanzteil ausgebildet.

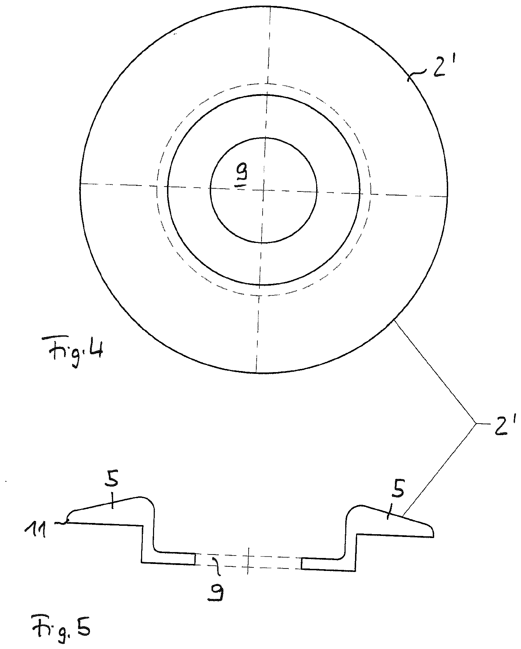

Alternativ kann das tellerförmige Befestigungselement 2' auch als Drehteil ausgebildet sein. Es ist dann beispielsweise so gestaltet, wie in den Fig. 4 und 5 dargestellt. Dabei sind in den Fig. 4 und 5 dieselben Bezugszeichen wie in den Fig. 1 bis 3 verwandt, lediglich das tellerförmige Befestigungselement ist mit 2' bezeichnet.

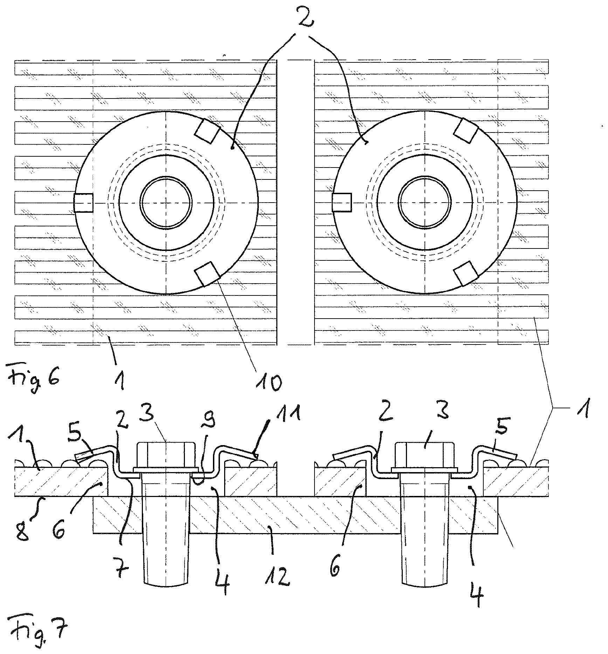

In den Fig. 6 und 7 ist eine erste Einbausituation dargestellt, bei welcher die Tränenbleche 1 auf einem flächigen Tragelement befestigt sind, welches als Fugen-Unterlegblech 12 ausgebildet ist. Auf diesem Fugen-Unterlegblech 12 wird zunächst ein Tränenblech 1 in der gewünschten Lage positioniert. Anschließend wird das tellerförmige Befestigungselement 2 der Vorrichtung in eine Bohrung 4 im Tränenblech 1 eingesetzt und nachfolgend wird eine selbstfurchende Befestigungsschraube 3 durch die Durchtrittsöffnung 9 im tellerförmigen Befestigungselement 2 hindurchgeführt und in eine werkseitig im Fugen-Unterblech 12 vorgesehene Bohrung eingeschraubt.

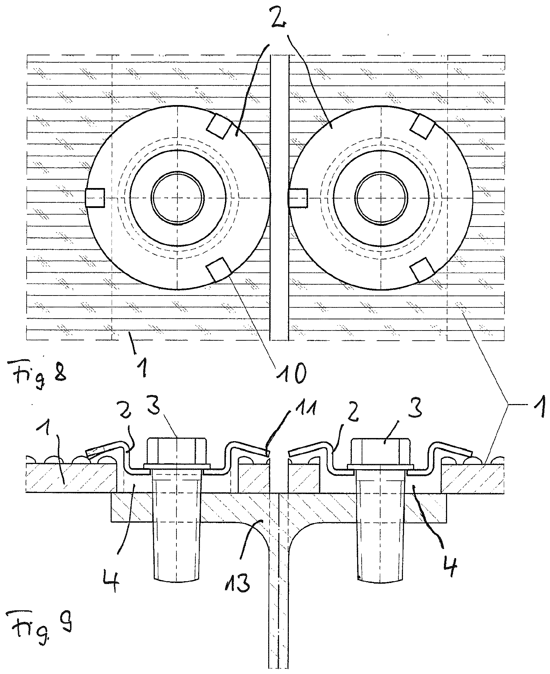

In den Fig. 8 und 9 ist eine zweite Einbausituation dargestellt, die sich von derjenigen nach den Fig. 6 und 7 nur dadurch unterscheidet, dass die Tränenbleche 1 nicht auf einem Fugen-Unterlegblech, sondern auf einem T-Stahlträger 13 angeordnet und in entsprechender Weise befestigt werden. Der T-Stahlträger 13 ist ebenfalls werkseitig mit Bohrungen zum Einschrauben der Befestigungsschrauben 3 ausgestattet.

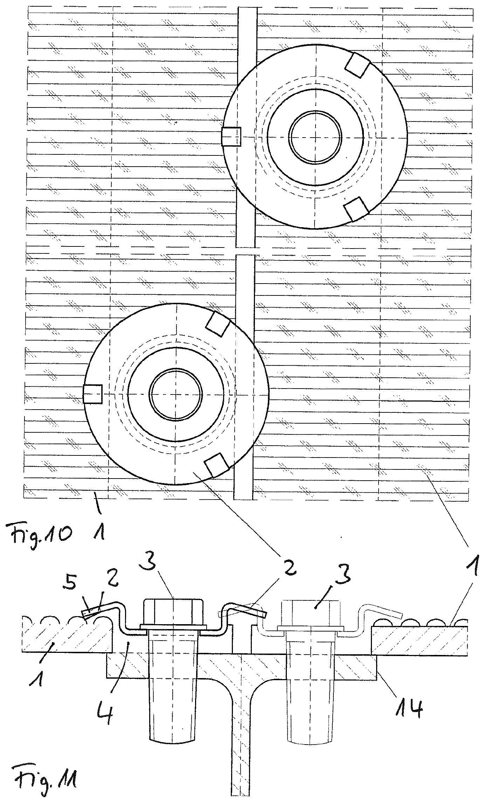

Die Fig. 10 und 11 zeigen eine Einbausituation, die der nach den Fig. 8 und 9 ähnlich ist. In diesem Falle ist das flächige Tragelement von einem schmalen T-Stahlträger gebildet. In der Einbausituation werden die Vorrichtungen zur Befestigung benachbarter Tränenbleche 1 in der in Fig. 10 dargestellten Weise versetzt zueinander angeordnet und entsprechend die selbstfurchenden Befestigungsschrauben 3 versetzt angebracht.

Die Erfindung ist nicht auf die dargestellten Ausführungsbeispiele beschränkt. Weitere Ausgestaltungen sind möglich.

### Bezugszeichenliste:

- 1: plattenförmiges Element
- 2, 2': tellerförmiges Befestigungselement
- 3: Befestigungsschraube
- 4: Bohrung
- 5: Randbereich
- 6: Bohrungsrand
- 7: Unterkante
- 8: Unterkante
- 9: Durchtrittsöffnung
- 10: Auflagenasen
- 11: Außenrand
- 12: Fugen-Unterlegblech
- 13: T-Stahlträger
- 14: schmaler T-Stahlträger

## Patentansprüche

1. Vorrichtung zur Befestigung von plattenförmigen Elementen (1) an darunter angeordneten, flächigen Tragelementen mit einer durch eine Bohrung (4) im plattenförmigen Element (1) hindurchgreifenden Befestigungsschraube (3), welche am flächigen Tragelement befestigbar ist, wobei ein in die Bohrung (4) im plattenförmigen Element (1) einsetzbares tellerförmiges Befestigungselement (2,2') vorgesehen ist, welches mit einem umlaufenden Randbereich (5) auf dem Bohrungsrand (6) aufliegt und eine zentrale Durchtrittsöffnung (9) für die Befestigungsschraube (3) aufweist, wobei der Schraubenkopf der Befestigungsschraube (3) angrenzend an die zentrale Durchtrittsöffnung (9) auf dem innerhalb der Bohrung (4) im plattenförmigen Element (1) befindlichen Bereich des tellerförmigen Elementes (2,2') aufliegt,
**dadurch gekennzeichnet,**
**dass** die Befestigungsschraube als selbstfurchende, in das Tragelement (12, 13, 14) einschraubbare Befestigungsschraube ausgebildet ist.

2. Vorrichtung nach Anspruch 1,
**dadurch gekennzeichnet,**
**dass** der innerhalb der Bohrung (4) im plattenförmigen Element (1) befindliche Bereich des tellerförmigen Befestigungselementes (2,2') so dimensioniert ist, dass seine Unterkante (7) oberhalb der Unterkante (8) des plattenförmigen Elementes (1) angeordnet ist.

3. Vorrichtung nach Anspruch 1 oder 2,
**dadurch gekennzeichnet,**
**dass** das tellerförmige Befestigungselement (2,2') an der Unterseite des umlaufenden Randbereiches (5) vorstehende Auflagenasen (10) aufweist.

4. Vorrichtung nach einem oder mehreren der Ansprüche 1 bis 3,
**dadurch gekennzeichnet,**
**dass** der umfängliche Randbereich (5) des tellerförmigen Befestigungselementes (2,2') zum Außenrand (11) hin nach unten geneigt ausgebildet ist.

5. Vorrichtung nach einem oder mehreren der Ansprüche 1 bis 4,
**dadurch gekennzeichnet,**
**dass** das tellerförmige Befestigungselement (2) als Blechstanzteil ausgebildet ist.

6. Vorrichtung nach einem oder mehreren der Ansprüche 1 bis 4,
**dadurch gekennzeichnet,**
**dass** das tellerförmige Befestigungselement (2') als Drehteil ausgebildet ist.

## Claims

1. Device for fastening plate-shaped elements (1) to flat carrier elements arranged thereunder, with a fastening screw (3) engaging through a hole (4) in the plate-shaped element (1), which can be fastened to the flat carrier element, wherein a plate-shaped fastening element (2, 2') is provided which can be inserted in the hole (4) in the plate-shaped element (1), which rests with a circumferential edge region (5) on the rim (6) of the hole and has a central through-opening (9) for the fastening screw (3), wherein the screw head of the fastening screw (3) rests adjoining the central through-opening (9) in the region of the plate-shaped element (2, 2') located inside the hole (4) in the plate-shaped element (1),
**characterised in that**
the fastening screw is formed as a self-tapping fastening screw that can be screwed into the carrier element (12, 13, 14).

2. Device according to claim 1,
**characterised in that**
the region of the plate-shaped fastening element (2, 2') located inside the hole (4) in the plate-shaped element (1) is dimensioned such that its lower edge (7) is arranged above the lower edge (8) of the plate-shaped element (1).

3. Device according to claim 1 or 2,
**characterised in that**
the plate-shaped fastening element (2, 2') has projecting lugs (10) on the underside of the circumferential edge region (5).

4. Device according to one or more of claims 1 to 3,
**characterised in that**
the circumferential edge region (5) of the plate-shaped fastening element (2, 2') is formed inclined downwards towards the outer edge (11).

5. Device according to one or more of claims 1 to 4,
**characterised in that**
the plate-shaped fastening element (2) is formed as a stamped sheet metal part.

6. Device according to one or more of claims 1 to 4,
**characterised in that**
the plate-shaped fastening element (2') is formed as a turned part.

## Revendications

1. Dispositif pour fixer des éléments en forme de plaque (1) sur des éléments de support plats, disposés dessous, avec une vis de fixation (3) traversant un trou (4) dans l'élément en forme de plaque (1), laquelle peut être fixée sur l'élément de support plat, dans lequel un élément de fixation en forme de disque (2, 2') pouvant être inséré dans le trou (4) dans l'élément en forme de plaque (1) est prévu, lequel repose avec une zone de bord périphérique (5) sur le bord de trou (6) et présente une ouverture de passage centrale (9) pour la vis de fixation (3), dans lequel la tête de vis de la vis de fixation (3) repose de manière adjacente à l'ouverture de passage centrale (9) sur la zone, située à l'intérieur du trou (4) dans l'élément en forme de plaque (1) de l'élément en forme de disque (2, 2'),
**caractérisé en ce**
**que** la vis de fixation est réalisée sous la forme d'une vis de fixation auto-taraudeuse, pouvant être vissée dans l'élément de support (12, 13, 14).

2. Dispositif selon la revendication 1,
**caractérisé en ce**
**que** la zone, située à l'intérieur du trou (4) dans l'élément en forme de plaque (1), de l'élément de fixation en forme de disque (2, 2') est dimensionnée de sorte que son bord inférieur (7) est disposé au-dessus du bord inférieur (8) de l'élément en forme de plaque (1).

3. Dispositif selon la revendication 1 ou 2,
**caractérisé en ce**
**que** l'élément de fixation en forme de disque (2, 2') présente des ergots d'appui (10) faisant saillie sur la face inférieure de la zone de bord périphérique (5).

4. Dispositif selon l'une ou plusieurs des revendications 1 à 3,
**caractérisé en ce**
**que** la zone de bord périphérique (5) de l'élément de fixation en forme de disque (2, 2') est réalisée de manière inclinée vers le bas en direction du bord extérieur (11).

5. Dispositif selon l'une ou plusieurs des revendications 1 à 4,
**caractérisé en ce**
**que** l'élément de fixation en forme de disque (2) est réalisé en tant que pièce de tôle découpée à la presse.

6. Dispositif selon l'une ou plusieurs des revendications 1 à 4,
**caractérisé en ce**
**que** l'élément de fixation en forme de disque (2') est réalisé en tant que pièce rotative.
